(19) Europäisches Patentamt
European Patent Office
Office européen des brevets

(11) Veröffentlichungsnummer: **0 107 090**
**B1**

(12) **EUROPÄISCHE PATENTSCHRIFT**

(45) Veröffentlichungstag der Patentschrift: **22.07.87**

(51) Int. Cl.⁴: **G 02 F 1/133**, G 02 B 5/30

(21) Anmeldenummer: **83109663.1**

(22) Anmeldetag: **28.09.83**

# (54) Doppelbrechungsfreie Anordnung von Kunststoffolien.

(30) Priorität: **09.10.82 DE 3237480**
**03.08.83 DE 3327929**

(43) Veröffentlichungstag der Anmeldung:
**02.05.84 Patentblatt 84/18**

(45) Bekanntmachung des Hinweises auf die Patenterteilung:
**22.07.87 Patentblatt 87/30**

(84) Benannte Vertragsstaaten:
**CH DE FR GB IT LI**

(56) Entgegenhaltungen:
**EP-A-0 089 493**
**FR-A-900 358**
**FR-A-906 683**
**US-A-2 441 049**

**JOURNAL OF RESEARCH OF THE NATIONAL BUREAU OF STANDARDS - C. ENGINEERING AND INSTRUMENTATION, Band 69C, Nr. 2, April/Juni 1965, Seiten 103-114, Washington, US, L.H. ADAMS u.a.: "Superimposed birefactory plates"**
**PATENTS ABSTRACTS OF JAPAN, Band 5, Nr. 169 (P-86) 841, 28. Oktober 1981**
**SOV. J. OPT. TECHNOL., Band 41, Nr. 10, Oktober 1974, Seiten 492-498, The Optical Society of America, New York, US, I.D. TORBIN u.a.: "Polymer optical components"**

(73) Patentinhaber: **BAYER AG, Konzernverwaltung RP Patentabteilung, D-5090 Leverkusen 1 Bayerwerk (DE)**

(72) Erfinder: **Claussen, Uwe, Dr., Carl- Rumpff-Strasse 29, D-5090 Leverkusen 1 (DE)**
Erfinder: **Hannes, Hellmut, Dr., Carl- Rumpff-Strasse 53, D-5090 Leverkusen 1 (DE)**
Erfinder: **Weber, Hans- Leo, Dipl.- Ing., Dahlienweg 7, D-4049 Rommerskirchen 2 (DE)**

**EP 0 107 090 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Flüssigkristalldisplay mit einem Fenster, das eine optisch einachsige, doppelbrechende Kunststoffolie aufweist.

Bei Sichtanzeigen - insbesondere bei Flüssigkristalldisplays - wird bisher Glas als universeller und einzig technisch genutzter Werkstoff verwendet.

Die Verwendung von Glas ist jedoch mit einer Reihe von Nachteilen verbunden. Aus Kostengründen werden Alkalisilikatgläser verwendet, die mit SiO beschichtet werden müssen, um ein Auswandern des Alkali zu verhindern. Die Formate sind begrenzt, weil Glas spröde ist. Deswegen lassen sich nur bestimmte, von der Maschinenausrüstung abhängige Formate verarbeiten, die sich kostengünstig durch Ritzen und Brechen nur auf Rechteckformate unterteilen lassen. Ein weiterer prinzipieller Nachteil ist die Splitterbildung bei Glasplatten.

Sie ist Ursache von Ausfallen, weil sie die Erhaltung des Plattenabstands, der nur etwa 10 µm beträgt, verhindert.

Weiterhin ist der Handhabungs- und Lagerungsaufwand bei den anfallenden hohen Stückzahlen und verschiedenen Formaten erheblich. Darüber hinaus bedingt die Zerbrechlichkeit des Glases Plattenstärken von mindestens 1 mm, die wegen der spezifischen Dichte ein hohes Gewicht besitzen, das für den Transport sowie auch für die spätere Anwendung unvorteilhaft ist.

Es hat daher nicht an Versuchen gefehlt, durchsichtige Kunststoffe beispielsweise bei Flüssigkristalldisplays einzusetzen (s. z.B. US-A-4 228 574, GB-A-2 052 779, JP-A-56 126 720, JP-A-50 17 135, JP-A-56 053 169, JP-A-60 72 484, JP-A-61 55 922). Die Konstruktion von Flüssigkristalldisplays auf Kunststoffbasis ist weiterhin aus SID 81, S.86 f.; SID 81, S. 116 f. und SID 82, S. 178 - 181 bekannt. Kunststoff ist aber in der Regel weder isotrop noch mechanisch oder chemisch besonders widerstandfähig noch billig; dagegen hervorragend für eine automatische Fertigung geeignet (US-A-4 228 574). Es ist offenbar, daß man die Technologie der Glas-Displays nicht einfach auf Kunststoff übertragen kann. Zwar kann man für jeden Verfahrensschritt der Glastechnologie einen Kunststoff finden, der den Eigenschaften des Glases nahekommt oder es sogar übertrifft. Aber bislang ist keine Kunststoffzelle beschrieben worden die der Glaszelle ebenbürtig wäre, weil eben alle Eigenschaften von einem Kunststoff geliefert werden müssen.

So ist vorgeschlagen worden, an Stelle des Glases Polyester einzusetzen. Polyester ist als Folie stark doppelbrechend, ist also für die bisher übliche, Polarisatoren verwendenden Bauelemente unbrauchbar.

Cellulosebutyrat ist isotrop aber hinsichtlich seiner mechanischen, insbesondere thermischen und auch chemischen Eigenschaften unbefriedigend. Außerdem ist das Material verhältnismäßig lichtstreuend.

Weiterhin ist Polycarbonat vorgeschlagen worden (JP-A-55 017 135).

Sofern der Kunststoff nicht von Natur aus isotrop ist wie das Cellulosebutyrat, fehlen in der Literatur Hinweise oder Lösungsvorschläge, wie man das Problem der optischen Doppelbrechung überwinden kann.

Viele technisch wichtige Anzeigetypen auf der Basis von Flüssigkristallen, z.B. die TN-Zelle oder die Heilmeier-Zelle arbeiten mit polarisiertem Licht. Es ist daher wichtig, daß die bei solchen Zellen verwendeten Fenster keinen störenden Einfluß auf das polarisierte Licht ausüben. Bekanntlich beruht die Doppelbrechung in einem optisch einachsigen Kristall darauf, daß Lichtstrahlen mit senkrecht aufeinander stehenden Polarisationsebenen verschieden stark gebrochen werden. Auf diesem Effekt beruht z.B. das bekannte Nichol-Prisma zur Herstellung von polarisiertem Licht. Gleichzeitig mit der Doppelbrechung wird der Polarisationszustand des Lichtes verändert. Insbesondere kann aus linear polarisiertem Licht, das senkrecht auf eine Kunststoffolie auffällt, elliptisch polarisiertes Licht entstehen. Es leuchtet daher ein, daß die Verwendung von doppelbrechenden Kunststoffolien als Fenster bei Anzeigeeinheiten (Displays) zu großen Schwierigkeiten führt, wenn der Anzeigeeffekt seinerseits auf einer durch das elektrische Feld induzierten oder beeinflußten Doppelbrechung oder Drehung der Polarisationsebene in der Flüssigkristallschicht beruht. Die Lösung des Problems der Doppelbrechung bildet daher die wesentliche Voraussetzung für die technische Verwendung von Kunststoffen bei Flüssigkristallanzeigeeinheiten.

Aus "Patent Abstracts of Japan" Bd. 5, Nr. 169 (P-86) (841) ist ein Flüssigkristalldisplay mit einem Fenster, das eine optisch einachsige Kunststoffolie aufweist, bekannt. Die US-A-2 441 049 beschreibt eine doppelbrechungsfreie Anordnung von Kunststoffolien.

Der Erfindung liegt die Aufgabe zugrunde für das Fenster eines Flüssigkristalldisplays Anordnungen aus Kunststoffolien zu finden, bei denen die Wirkung der Doppelbrechung eliminiert wird.

Diese Aufgabe wird erfindungsgemäß dadurch gelöst, daß das Fenster durch zwei parallel hintereinanderliegende optisch einachsige Kunststoffolien gebildet ist, deren optische Achsen in der Folienebene liegen, die derart angeordnet sind, daß die jeweils der größeren Hauptbrechungszahl entsprechenden Richtungen der beiden Kunststoffolien einen Winkel von 90 ± 7° bilden und deren Folienmaterial im Hinblick auf die Hauptbrechungszahlen und die Dicken so ausgewählt ist, daß die optische Weglängendifferenz $\Delta_1 d_1$ in der ersten Kunststoffolie annähernd gleich ist der optischen Weglängendifferenz $\Delta n_2 d_2$ in der zweiten Kunststoffolie, wobei $\Delta n_1$, $\Delta n_2$ die Differenzen der Hauptbrechungszahlen in der ersten bzw. zweiten Kunststoffolie und $d_1$, $d_2$ die Dicken der ersten bzw. zweiten Kunststoffolie bedeuten.

Die den beiden Hauptbrechungszahlen entsprechenden, senkrecht zueinander polarisierten Lichtwellen erfahren also in der ersten Kunststoffolie einen Gangunterschied, der dann durch die zweite Kunststoffolie wieder aufgehoben wird. Gleichbedeutend damit ist, daß die durch die erste Kunststoffolie hervorgerufene Phasenverschiebung zwischen den beiden Lichtwellen durch die zweite Kunststoffolie rückgängig gemacht

(kompensiert) wird. Linear polarisiertes Licht kann diese Anordnung ungestört passieren. Die Entstehung von elliptisch polarisiertem Licht wird vermieden.

Im Prinzip könnten die Folien derart hintereinander angeordnet werden, daß insgesamt die Bedingung gilt, daß sich die Phasendifferenzen in den einzelnen Folien so aufaddieren, daß beim Austritt der Lichtstrahlen aus der letzten Kunststoffolie wieder Gleichphasigkeit herrscht. Es handelt sich dabei aber nur um eine kompliziertere Ausnutzung ein- und desselben Effektes. Besonders klare und übersichtliche Verhältnisse ergeben sich dann, wenn die beiden Kunststoffolien aus dem gleichen Material bestehen und die gleiche Dicke besitzen; d.h., wenn sie z.B. aus einer größeren Folie ausgeschnitten sind.

Der Kunststoff muß optisch einachsig doppelbrechend sein. Die das Material charakterisierende Doppelbrechung kann als Differenz der Hauptbrechungszahlen ($\Delta n$) angegeben werden und kennzeichnet dann die Materialeigenschaft ohne Bezug auf die Dicke des Objekts.

Gemessen wird die Doppelbrechung in Form einer Wegdifferenz (Gangunterschied) als das Produkt $G = \Delta n.d$ ($d$ = Foliendicke). G hat die Dimension einer Länge und wird gewöhnlich in Nanometer angegeben.

Es hat sich herausgestellt, daß die Einhaltung des rechten Winkels zwischen den optischen Achsen, d.h. die Orientierung der beiden Folien gegeneinander von wesentlicher Bedeutung ist. Der rechte Winkel sollte daher mit einer Toleranz von höchstens 7°, vorzugsweise höchstens 2° eingehalten werden. Weniger kritisch sind dagegen die Dickentoleranzen für die Kunststoffolien. Bei gleichartigen Folien sind z.B. Dickenunterschiede bis zu etwa 10 µm noch tolerierbar.

Die Richtung der optischen Achse muß innerhalb der Folie hinreichend konstant sein. Schwankungen bewirken nämlich eine Inhomogenität der optischen Eigenschaften, die sich u.a. durch wolkige Aufhellungen des Gesichtsfeldes zwischen gekreuzten Polarisatoren bemerkbar macht. Es ist deshalb eine möglichst kleine Abweichung, die unter 7° liegen muß, anzustreben.

Die Dicke der Folien kann zwischen 800 und 5 µm schwanken. Bevorzugt ist eine Dicke von 50 bis 250 µm.

Es gibt zahlreiche verschiedene Bauweisen für ein Display, von denen die TN-Zelle, die "guest-host"-Zelle oder die Doppelschichtzelle beispielhaft genannt seien. Sie können α -numerisch oder Matrix-gesteuert sein.

Die Kunststoffolien können räumlich getrennt hintereinander angeordnet werden. Bezüglich des gewünschten Effektes ist es unerheblich, an welcher Stelle sich die Flüssigkristallschicht (nematische Phase) im Strahlengang befindet. Je nach Bauart oder den technischen Erfordernissen können die nematischen Phasen vor oder hinter den optisch einachsigen, gekreuzten Folien angeordnet werden. Entscheidend ist allein, ob insgesamt eine Kompensation des durch die erste Folie verursachten Gangunterschieds erreicht wird.

Zweckmäßig sind die beiden Folien jedoch zu einer Einheit zusammengefügt, so dan ein Kunststoffverbund entsteht. Ein solcher Verbund kann dadurch hergestellt werden, daß die Folien flächig miteinander verschweißt werden.

In einer bevorzugten Ausführungsform sind die Folien flächig miteinander verklebt.

Als Klebstoff kommt grundsätzlich jedes Material infrage, das optisch durchsichtige, farblose und doppelbrechungsfreie Schichten liefert. Bevorzugt sind Reaktivkleber, insbesondere Zweikomponenten-Reaktivkleber. Von diesen haben sich die Polyurethanklebstoffe als besonders brauchbar erwiesen, wobei man mit linearen aliphatischen Isocyanaten besonders lichtechte Verklebungen erhält. Es können lösungsmittelhaltige und lösungsmittelfreie Klebstoffzubereitungen gleichermaßen verwendet werden. Lösungsmittelfreie Systeme lassen sich häufig leichter handhaben und sind daher bevorzugt. Der Kleber kann Hilfs- und Zusatzstoffe enthalten, die seine Verarbeitungseigenschaften z.B. die Abbindezeit beeinflussen.

Unter Umständen kann die Klebeschicht mit in die optischen oder mechanischen Funktionen einbezogen werden. Bei der Ausführung mit zwei gleichartigen Folien ist es z.B. in optischer Hinsicht günstig, wenn die Klebeschicht den gleichen Brechungsindex besitzt wie die Folien. Auf diese Weise können störende Reflexionen an der Klebeschicht minimiert werden. Ferner kann die Klebeschicht z.B. Wasserdampf- oder Gassperrende Funktionen übernehmen.

Aus dem doppelbrechungsfreien Folienverbund lassen sich alle erforderlichen Formate nach Bedarf herstellen, so daß diese Ausführungsform sowohl vom Aufbau wie von der Lagerhaltung besonders wirtschaftlich ist.

Für ihren Einsatz in Displays müssen die Kunststoffolien neben ausreichenden mechanischen Eigenschaften wie Formstabilität, Wasserdampfdurchlässigkeit, Kratzfestigkeit sowie Temperaturunempfindligkeit sich kontinuierlich und flexibel zu allen geforderten Formen verarbeiten lassen und müssen chemisch gegen die Einwirkung vielfältiger Hilfschemikalien wie Flüssigkristalle, Farbstoffe, Orientierungsschichten usw. beständig sein.

Obgleich die Folie in der beschriebenen Form bereits ausreichend verwendungsfähig ist, läßt sie sich durch Oberflächenvergütungen weiter verbessern. Insbesondere Kratzfest-Beschichtungen mit beispielsweise Polyacrylaten und/oder Polymethacrylaten, Si-haltigen Polymeren wie Silanen oder aber Siloxanen oder aber Oberflächenvernetzungen durch Einwirkung elektrischer Entladungen wie Plasmapolymerisationen sind im besonderen Maße geeignet. In einer möglichen Ausführungsform sind die Folien mit halogenierten Verbindungen wie Dichlorvinylidenchlorid (DCVC), insbesondere aber auch fluorierten Verbindungen oder Polyethylen versehen, wobei Beschichtungen besonders bevorzugt sind.

Durch diese Maßnahmen kann die Wasserdampfdurchlässigkeit wesentlich verringert werden, was insbesondere bei Displays vorteilhaft ist.

Für den Einsatz in Displays und anderen Elementen, bei denen es auf hohe Genauigkeit ankommt, ist eine geringe Rauhigkeit, insbesondere Mikrorauhigkeit, und eine geringe Dickenschwankung notwendig. Unter

Mikrorauhigkeit wird die Unebenheit der Oberfläche im mikroskopischen Bereich (Lateralstruktur etwa < 30 µm) verstanden. In diesem Bereich muß sie < 0,2 µm, vorzugsweise < 0,05 µm, sein, es dürfen keine Stippen, Mulden, Kuppen o.a. vorkommen. Die Mikrorauhigkeit wird im Auflicht-Interferenzmikroskop an zuvor metallisch bedampften Proben geprüft.

Unter Dickenschwankung wird die Änderung der Dicke einer Folie über größere Entfernungen (mm- bzw. cm-Bereich) verstanden. Die Dickenschwankung einer 7x7 cm großen Platte sollte bei < 10 µm, vorzugsweise < 5 µm, liegen, der Gradient < 3 µm/cm sein. Die Prüfung erfolgt im Durchlicht mit einem Mach-Zehnder Interferometer.

Als Kunststoffe kommen solche in Frage, die klar durchsichtige, flächige Gebilde liefern und sich optisch einachsig herstellen lassen. Dies kann beispielsweise durch Gießen oder Extrudieren geschehen, aber es läßt sich kein universelles Verfahren angeben. Prinzipiell ist es notwendig, den Polymerverband beweglich zu machen und ihn unter Anwendung einer geringen gerichteten Kraft zu orientieren. Friert man jetzt diese Beweglichkeit unter dem Einfluß einer richtenden Kraft ein, so entsteht ein optisch einachsiger Kunststoff.

Bevorzugt sind Gußverfahren, bei denen das Polymer in einem geeigneten möglichst leichtflüchtigen Lösungsmittel gelöst wird und nachfolgend zu einer Schicht ausgegossen wird, aus der das Lösungsmittel z.B. durch Verdampfen entfernt werden kann. Besonders geeignet für diesen Prozeß ist Polycarbonat.

Geeignete Kunststoffe sind z.B. Polyarylsulfon, Polystyrol, Polyvinylchlorid oder Polyurethan. Vorzugsweise verwendet man Polymerisate, die gute optische Qualitäten haben, wie Styrol-Acrylnitril-Mischpolymerisate, Polymethylpenten, Polycarbonat, Polyacrylsäureester, Polymethacrylsäureester, Celluloseester oder Mischungen und Copolymerisate, welche die genannten Polymere enthalten. Ganz besonders bevorzugt werden Polycarbonat oder Mischungen von Kunststoffen, die mindestens 10 Gew.-% Polycarbonat enthalten, eingesetzt.

Besonders geeignet zur Herstellung der doppelbrechungsfreien Fenster sind Gießfolien aus Gemischen von 90 Gew.-% bis 60 Gew.-% linearem Polyarylsulfon und 10 Gew.-% bis 40 Gew.-% linearem Polycarbonat, wie sie z.B. aus der DE-A-2 948 673 bekannt sind.

Diese haben vorzugsweise mittlere Gewichte der Molekulargewichte $\bar{M}_w > 60000$ und sind z.B. dadurch erhältlich, daß man Lösungen der Polyarylsulfone und Polycarbonate vor der Herstellung der Gießfolien durch Zugabe eines Lösungsvermittlers in Mengen von 5 - 30 Gew.-%, bezogen auf eingesetzten Feststoff, stabilisiert und die dann nach üblichen Verfahren hergestellten Gießfolien trocknen und im Reckverhältnis zwischen 1:2 und 1:5 oberhalb der Einfriertemperatur der Polyarylsulfon-Polycarbonat-Gemische nach üblichem Verfahren verstreckt.

Als Polycarbonate für die Erfindung kommen die durch Umsetzung von aromatischen Dihydroxyverbindungen, insbesondere von Dihydroxydiarylalkanen mit Phosgen oder Diestern der Kohlensäure erhältlichen Polykondensate in Betracht, obwohl neben den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Bevorzugt ist gegossenes Polycarbonat.

Die Polycarbonate haben mittlere Gewichtsmittel der Molekulargewichte $\bar{M}_w$ zwischen 10 000 und 100 000, vorzugsweise zwischen 20 000 und 40 000, die durch Messung von $\eta_{rel}$ in $CH_2Cl_2$ bei 20°C und einer Konzentration von 0,5 g pro 100 ml ermittelt werden. $\bar{M}_w$ für Polycarbonat-Gußmaterial beträgt vorzugsweise 75 000 - 110 000.

Geeignete aromatische Dihydroxyverbindungen sind z.B. Hydrochinon, Resorcin, 4,4'-Dihydroxydiphenyl, Bis-(hydroxyphenyl)alkane wie beispielsweise $C_1$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone ferner α, α'-Bis-(hydroxyphenyl)diisopropyl-benzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-5,5-dibrom-phenyl)-propan-2,2 (Tetrabrombisphenol A), Bis-(4-hydroxy-3,5-dimethylphenyl)-propan-2,2 (Tetramethylbisphenol A), Bis-(4-hydroxy-phenyl)-cyclohexan-1,1 (Bisphenol Z) sowie auf Basis von Dreikernbisphenolen wie α, α' -Bis-(4-hydroxyphenyl)-p-diisopropylbenzol.

Weitere für die Herstellung von Polycarbonaten geeignete aromatische Dihydroxyverbindungen sind in den US-Patenten 2 970 131, 2 991 273, 2 999 835, 2 999 846, 3 028 365, 3 062 781 und 3 271 367 beschrieben.

Celluloseester für die Erfindung werden nach üblichen Verfahren durch Veresterung der Cellulose mit aliphatischen Monocarbonsäureanhydriden, vorzugsweise Essigsäure- und Buttersäure- oder Essigsäure- und Propionsäureanhydrid, gewonnen. Die in der Rohlösung durchzuführende Hydrolyse wird durch einen geringen Wasserüberschuß so gesteuert, daß ein geringer Hydroxylgehalt (4 bis 25) erhalten wird. Die oxidative Bleiche des aus der Lösung isolierten Celluloseesters muß so durchgeführt werden, daß im Endprodukt kein Oxydationsmittel mehr nachweisbar ist; gegebenenfalls muß eine Nachbehandlung mit Reduktionsmittel erfolgen.

Zur Bestimmung der OH-Zahl werden die freien Hydroxylgruppen des Celluloseesters mit Acetanhydrid in Pyridin verestert, der Überschuß Anhydrid mit Wasser umgesetzt und zurücktitriert [Vorschrift: C.J. Mahn, L.B. Genung und R.F. Williams, Analysis of Cellulose Derivatives, Industrial and Engineering Chemistry, Vol. 14. Nr. 12, 935-940 (1942)].

Die Viskosität der Celluloseester soll 0,04 bis 0,05 Pa s (0,4 bis 0,5 Poise), gemessen als 20 gew.-%ige Lösung in Aceton, betragen. Vorzugsweise zu verwendende Celluloseester weisen im Falle der Acetobutyrate einen

Essigsäuregehalt von 17 bis 23 Gew.-% und einen Buttersäuregehalt von 45 bis 50 Gew.-%, im Falle der Acetopropionate einen Propionsäuregehalt von 61-69 Gew.-% und einen Essigsäuregehalt von 2-7 Gew.-% auf. Die OH-Zahlen liegen üblicherweise zwischen 4 und 25. Die mittleren Gewichtsmittel der Molekulargewichte $\bar{M}w$ liegen zwischen 10 000 und 1 000 000, vorzugsweise zwischen 100 000 und 500 000.

Geeignete Polyarylsulfone im Sinne der Erfindung haben mittlere Gewichtsmittelmolekulargewichte $\bar{M}w$ (gemessen nach der Lichtstreumethode in $CHCl_3$) zwischen 1 000 und 200 000, vorzugsweise zwischen 20 000 und 60 000. Beispiele dafür sind die nach bekannten Verfahren erhältlichen Polyarylsulfone aus 4,4'-Dichlordiphenylsulfon und einem Bisphenol, insbesondere 2,2-Bis-(4-hydroxy-phenyl)-propan, mit mittleren Gewichtsmittelmolekulargewichten ($\bar{M}w$) von 2 000 bis 200 000.

Für die vorliegende Erfindung geeignete Polystyrole sind Homopolymerisate des Styrols oder Mischpolymerisate des Styrols mit vorzugsweise Acrylnitril und/oder Butadien, und/oder Maleinsäureester, die z.B. durch Suspensionspolymerisation in Gegenwart von Katalysatoren aus den Monomeren bzw. der Mischung der Monomeren mit $\bar{M}w$ von 10 000-600 000 erhalten werden ($\bar{M}w$ wird gemessen in DMF bei c = 5 g/l und 20°C).

(Literatur dazu siehe: Beilsteins Handbuch der Organischen Chemie, vierte Auflage, Drittes Ergänzungswerk, Band 5, Seiten 1163-1169, Springer Verlag 1964, H. Ohlinger, Polystyrol, 1. Teil, Herstellungsverfahren und Eigenschaften der Produkte, Springer Verlag 1955).

Daneben sind Mischungen von Polymeren geeignet, die optisch durchsichtige Kunststoffe liefern. Der Vorteil dieser Mischungen ist eine Verbesserung der mechanischen insbesondere aber der chemischen Eigenschaften, vor allem der Widerstandsfähigkeit des Kunststoffs gegen die Bestandteile der flüssigkristallinen Phase bei erhöhten Temperaturen.

Bevorzugt sind Mischungen mit Siliconen oder Polyestern.

Doppelbrechungsfreie Kunststoffenster werden bei Displays eingesetzt.

Gegenüber herkömmlichen Gläsern haben sie den Vorteil, daß sie leichter und unzerbrechlich sind. Weiter ist die Herstellung durch einfachere Handhabung sowie Fertigstellung der Formate aus dem Vorprodukt Folienbahn sehr flexibel, so daß das Produkt sehr wirtschaftlich erstellt werden kann. Auch können die Kunststoffe durch eine zusätzliche amorphe Schutzfolie abgedeckt werden. Darüber hinaus sind weitere zusätzliche Ausrüstungen, z.B. zur Verbesserung der Flammwidrigkeit, denkbar.

Bei der Herstellung von Kunststoff-Displays ist es vorteilhaft, bestimmte Maßnahmen zu treffen, die den Materialeigenschaften entgegenkommen.

Hierzu gehören:

1. An Stelle der Polarisatoren werden pleochroitische Farbstoffe verwendet.

2. Die mechanische Stabilität wird durch eine flächige, ggf. mit dem pleochroitischen Farbstoff Ton in Ton gefärbte Verklebung erreicht.

Bei den Kunststoff-Displays können pleochroitische Farbstoffe in dem flüssigkristallinen Material gelöst sein. Insbesondere sind Azo- oder Anthrachinon-Farbstoffe geeignet, wie sie z.B. in der DE-A-30 36 853, DE-A-26 27 215, EP-A-49 035, EP-A-26 004 beschrieben sind. Zur Erzeugung einer Ton in Ton- oder Kontrast-Färbung kann man den Spacer oder den abstandsvermittelnden Kleber mit diesen oder anderen, ggf. nicht pleochroitischen Farbstoffen einfärben.

Die Einfärbung mit fluoreszierenden Farbstoffen, insbesondere die der hinteren Platte zum Zwecke der Lichtsammlung und Verteilung der Helligkeit der Anzeige ist eine bevorzugte Ausführungsform.

Die Biegsamkeit des Kunststoffs behindert die bei der Glastechnologie übliche Rahmenverklebung. Der hierbei gebildete schmale Steg kann bei Biegebeanspruchung schnell brechen. Vielmehr ist eine flächige Abstandshaltung vorteilhafter. Man kann dazu eine eingefärbte Folie mit 5-20 µm Dicke verwenden, in die die Anzeigemuster eingestanzt sind. Jedoch hat dieses Verfahren Nachteile, insbesondere bei den heute üblichen Elektrodenabständen um 10 µm. Die Eigendicke der Folie darf zusammen mit 2 Kleberschichten diesen Wert nicht überschreiten. Die Folie muß also bei hohen Anforderungen an die Dickenkonstanz extrem dünn sein. Dies führt zu erheblichen Problemen beim Ausstanzen oder Schneiden der Maske, da eine Dehnung der unmittelbar an die Schnittstelle angrenzenden Gebiete unvermeidbar ist. Es ist bevorzugt, einen Kleber in konstanter Dicke aufzutragen, beispielsweise im Siebdruck. Bevorzugte Kleber sind Reaktivkleber, z.B. auf Basis Epoxid-Harz oder Polyurethan.

Die dünnen Schichten der Folie sind für niedermolekulare Verbindungen, insbesondere Wasser oder Gase verhältnismäßig durchlässig. Daher werden an die Stabilität der Flüssigkristalle, die negative oder positive dielektrische Anisotropie aufweisen können, besondere Anforderungen gestellt. Eine Voraussetzung ist, daß sie das Hüllmaterial nicht angreifen und gleichzeitig wasserabweisend sind.

Man muß die geeigneten Mischungen Von Fall zu Fall aus der Vielzahl der bekannten und handelsüblichen Produkte zusammenstellen. Geeignete flüssigkristalline Materialien sind z.B. die bekannten Phenylalkylcyclohexane sowie die Biphenylalkylderivate.

Als flüssigkristalline Materialien geeignet sind beispielsweise Mischungen, die 4-Cyanbiphenyle enthalten. Ein Beispiel ist die Mischung E 7 der Fa. BDH-Chemicals Ltd. (GB), oder solche, die überwiegend 1-(4-Cyanphenyl)-4-alkyl-cyclohexane enthalten. Ein Beispiel hierfür ist die Mischung ZLI 1132 der Fa. Merck (Darmstadt). Weiterhin geeignet sind Mischungen der vorgenannten Stoffklassen mit (4-Cyanphenyl)-pyrimidinen, beispielsweise die Mischung ROTN 30 der Fa. F. Hoffmann-La Roche.

Als weitere Beispiele für käufliche und geeignete Flüssigkristallmischungen sind für eine positive DK-Anisotropie Produkte auf Cyanopyrimidin- und Cyanoester-Basis, sowie Mischungen aus BCH, PCH und PCH-Ester und PCH, BCH, BCH-Ester und Terphenyl (z.B. "ROTN 402", "ROTN 103", "Merck 1221 TNC", "Merck 1291 TNC", "Merck 1691", "Merck 1840") zu nennen.

Daneben aber können eine große Zahl anderer Komponenten eingesetzt werden, wobei in aller Regel Mischungen in Frage kommen, die den genannten Bestandteil enthalten. Insbesondere geeignet sind Verbindungen der folgenden Stoffklassen:

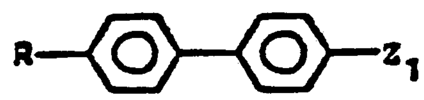
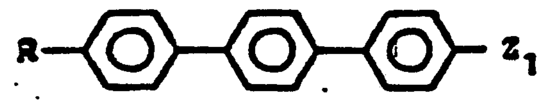

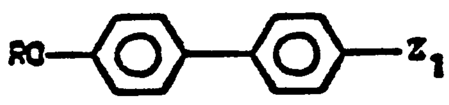
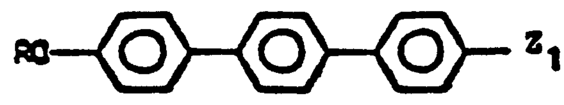

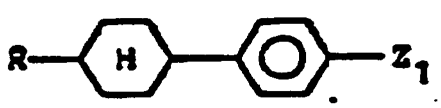
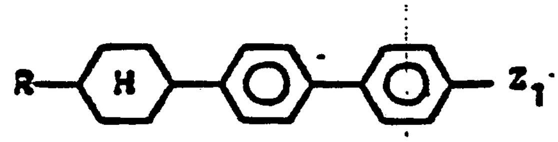

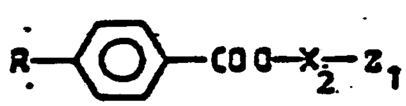
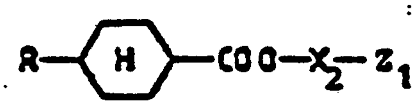

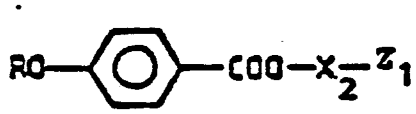
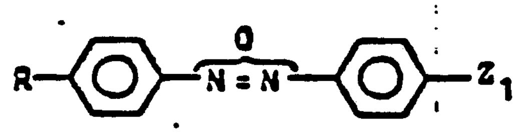

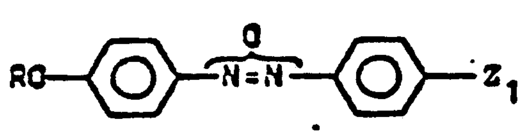
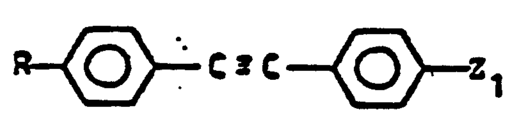

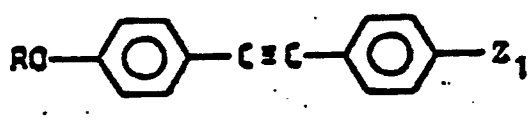
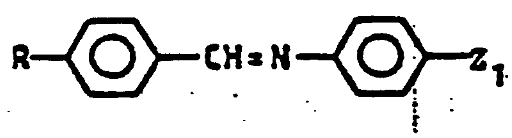

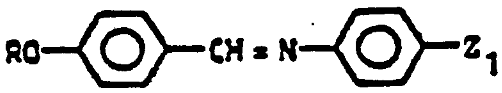
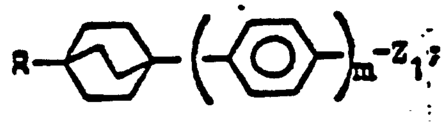 ; m=1,2

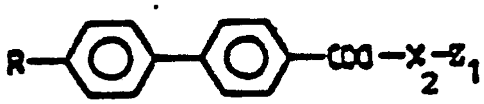
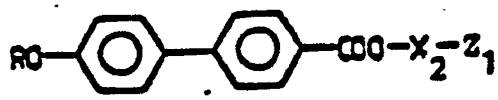

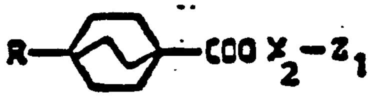
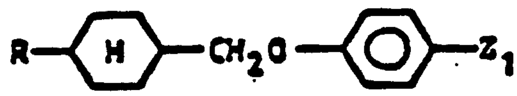

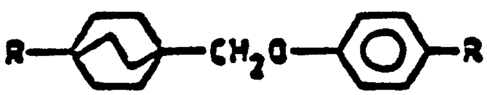
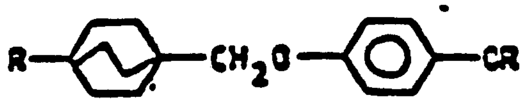

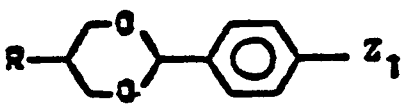
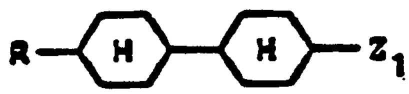

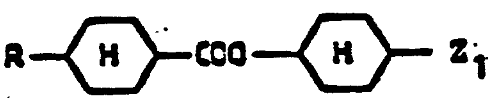
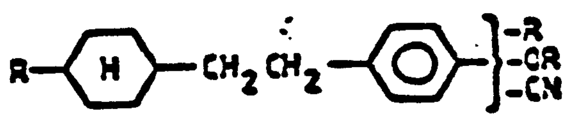

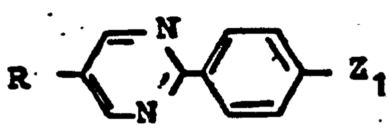
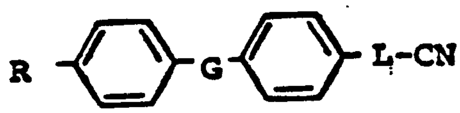

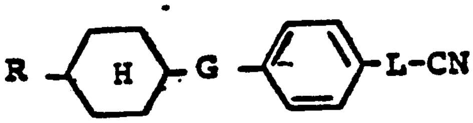

Jeder der enthaltenen Benzolringe kann durch einen oder mehrere Substituenten, z.B. Fluor, substituiert sein. Dabei sind

R eine Alkylgruppe,

$X_2$ eine 1,4-Phenylen-, 4,4'-Biphenylen- oder 2,6-Naphthylen-Gruppe,

$Z_1$ CN, R', OR', CO-O-$X_2$-$Z_2$,

$Z_2$ CN, R' oder OR' und

G,L -$CH_2CH_2$-, -CH=CH-, -C≡C-,

R' hat dieselbe Bedeutung wie R.

Alternativ hierzu die Möglichkeit die Schichtdicken des Hüllmaterials zu erhöhen. Dies kann durch Hinterspritzen des Halbzeugs oder der fertigen Anzeige mit einem doppelbrechungsarmen Material geschehen.

In einer weiteren Ausführungsform wird die Anzeigenmaske als Vertiefung im Spritzgußverfahren hergestellt. Hierbei entsteht eine Art Dose, die von oben füllbar ist. Der plane Deckel wird mit üblichen Techniken, wie Ultraschall, Laser, Klebstoffe oder thermisches Verschweißen aufgebaut.

Bei der Glastechnologie wird die Kavität, die das flüssigkristalline Material aufnehmen soll, zuerst fertiggestellt und dann z.B. in einem Vakuumprozeß gefüllt. Dies ist insbesondere bei großflächigen Anzeigen kompliziert und führt zu Fehlern. Ein besonderer Vorzug der erfindungsgemäßen Anzeigen ist es, daß sie kontinuierlich aus Bahnen gefertigt werden und im Augenblick ihres Entstehens gefüllt werden können. Die relativ weiche Beschaffenheit des Kunststoffes ermöglicht ebenfalls eine Füllung nach Fertigstellung der Anzeige, indem man den Kunststoff durchsticht, z.B. mit einer Kanüle, und die Füllöffnung anschließend wieder verklebt.

Die Schwierigkeiten, insbesondere bei großflächigen Anzeigen, Glas mit den umgebenden Bauteilen elektrisch dauerhaft zu verbinden, sind bekannt.

Bei dem erfindungsgemäßen Display ist es möglich, die elektronische Steuereinheit und die eigentliche Anzeige getrennt zu fertigen und sie hernach dauerhaft zu verkleben. Diese Technik bedeutet einen erheblichen Fortschritt, sie gewährleistet einen breiten Spielraum bei der Gestaltung der Anzeige.

Die Orientierungsschicht enthält die literaturbekannten Materialien, wie Polyvinylalkohol, Polyimid u.ä. Bevorzugt ist die Verwendung von Si-enthaltenden Polymeren.

Die Anordnung kann auch mit Erfolg bei solchen Anzeigetypen eingesetzt werden, bei denen die polarisierende Wirkung nicht durch getrennte Polarisatoren, sondern aufgrund der lichtoptischen Wirkungsweise der Flüssigkristallschicht erzeugt wird.

**Beispiel**

Bisphenol-A-Polycarbonat mit einem mittleren Molgewicht von 98 000 wird in Methylenchlorid zu einer 15 %igen Lösung gelöst und diese Lösung auf einen langsam rotierenden, beheizten und polierten Zylinder über eine Rakelvorrichtung aufgegeben. Man erhält einen klar durchsichtigen Film der Schichtdicke 150 µm.

Dieser Film wird in einem Polarisationsmikroskop zwischen gekreuzten Polarisatoren quantitativ mit einem Kompensator analysiert. Die Achsenzahl 1 oder 2 wird im konoskopischen Strahlengang eines Achsenbildtubus überprüft.

Man erhält für die Differenz der Hauptbrechungszahlen $\Delta n = 64.10^{-5}$ und daraus den Gangunterschied G zu 96 nm. Das Produkt ist optisch einachsig.

Zwei gleich große quadratische Abschnitte aus dieser Folie werden zwischen gekreuzten Polarisatoren einmal mit paralleler und einmal mit senkrechter Lage der optischen Achsen kombiniert und zwischen gekreuzten Polisatoren geprüft. Bei der Lage der Folie mit paralleler Ausrichtung ergibt sich eine erhebliche Aufhellung des Beobachtungsfeldes.

In einem solchen Fall entsteht elliptisch polarisiertes Licht, bei dem zwischen gekreuzten Polarisatoren keine Dunkelstellung mehr möglich ist. Beruht nun der Anzeigeeffekt bei einem Display gerade auf einem Aufhellungseffekt, der zwischen gekreuzten Polarisatoren beobachtet wird, so wirkt sich die durch die Doppelbrechung der beiden Folien verursachte Aufhellung störend aus und kann sogar den Anzeigeeffekt völlig überdecken.

Werden dagegen die beiden Folien so hintereinander angeordnet, daß ihre optischen Achsen aufeinander senkrecht stehen, so wird die durch die erste Folie hervorgerufene Phasenverschiebung bzw. der Gangunterschied durch die zweite Folie kompensiert. Hinter der zweiten Folie besteht kein oder nur ein minimaler Gangunterschied. Die Messung ergibt bei einer acetonverklebten Verbundfolie aus dem oben beschriebenen Material mit einer Gesamtdicke von 380 nm für die Differenz der Hauptbrechungszahlen $\Delta n = 3.10^{-5}$ und eine geringe Aufhellung entsprechend einem Gangunterschied G = 8 nm. Dies hat zur Folge, daß das Licht beim Durchtritt durch die Verbundfolie linear polarisiert bleibt, so daß nunmehr eine vollständige Auslöschung des Lichts zwischen gekreuzten Polarisatoren möglich ist. Auf dem dunklen Hintergrund kann dann der Anzeigeeffekt (z.B. Doppelbrechung der nematischen Phase bei Anlegen einer elektrischen Spannung) als Aufhellung störungsfrei beobachtet werden.

## Patentansprüche

1. Flüssigkristalldisplay mit einem Fenster, das eine optisch einachsige, doppelbrechende Kunststoffolie aufweist, dadurch gekennzeichnet, daß das Fenster durch zwei parallel hintereinanderliegende optisch einachsige Kunststoffolien gebildet ist, deren optische Achsen in der Folienebene liegen, die derart angeordnet sind, daß die jeweils der größeren Hauptbrechungszahl entsprechenden Richtungen der beiden Kunststoffolien einen Winkel von 90 ± 7° bilden und deren Folienmaterial im Hinblick auf die Hauptbrechungszahlen und die Dicken so ausgewählt ist, daß die optische Weglängendifferenz $\Delta n_1 d_1$ in der ersten Kunststoffolie annähernd gleich ist der optischen Weglängendifferenz $\Delta n_2 d_2$ in der zweiten Kunststoffolie, wobei $\Delta n_1$, $\Delta n_2$ die Differenzen der Hauptbrechungszahlen in der ersten bzw. zweiten Kunststoffolie und $d_1$, $d_2$ die Dicken der ersten bzw. zweiten Kunststoffolie bedeuten.

2. Flüssigkristalldisplay gemäß Anspruch 1, dadurch gekennzeichnet, daß die beiden Folien aus Material mit gleichen Hauptbrechungszahlen bestehen und gleiche Dicken aufweisen.

3. Flüssigkristalldisplay gemäß den Ansprüchen 1 - 2, dadurch gekennzeichnet, daß die Folien flächig miteinander verschweißt sind.

4. Flüssigkristalldisplay gemäß den Ansprüchen 1 - 2, dadurch gekennzeichnet, daß die Folien flächig miteinander verklebt sind, wobei der Kleber ein Zweikomponentenkleber ist.

5. Flüssigkristalldisplay gemäß Anspruch 4 dadurch gekennzeichnet daß der Kleber die gleiche Brechzahl besitzt wie das Folienmaterial.

6. Flüssigkristalldisplay gemäß den Ansprüchen 1 - 5, dadurch gekennzeichnet, daß das Folienmaterial Polyarylsulfon, Polystyrol, Polyvinylchlorid, Polyurethan, Styrol-Acrylnitril-Mischpolymerisat, Polymethylpenten, Polyacrylsäureester, Polymethacrylsäureester, Celluloseester oder eine Mischung oder ein Copolymerisat, welches die genannten Polymere enthält, ist.

7. Flüssigkristalldisplay gemäß den Ansprüchen 1 - 5, dadurch gekennzeichnet, daß das Folienmaterial Polycarbonat, vorzugsweise gegossenes Polycarbonat oder eine Kunststoffmischung, welche mindestens 10 Gew.-% Polycarbonat enthält, ist.

8. Flüssigkristalldisplay gemäß den Ansprüchen 1 - 7, dadurch gekennzeichnet, daß die Kunststoffolien mit halogenierten, insbesondere fluorierten Verbindungen, Si-haltigen Polymeren, Polyacrylaten und/oder Polymethacrylaten versehen, insbesondere beschichtet sind und/oder oberflächenvernetzt sind.

## Claims

1. Liquid crystal display with a window which contains an optically uniaxial, birefringent plastic film, characterised in that the window is formed by two optically uniaxial plastic films arranged parallel behind each other, whose optical axes lie in the plane of the film and which are arranged in such a manner that the directions of the two plastic films corresponding in each case to the larger main refractive index form an angle of 90 ± 7°, the material of the films, with respect to the main refractive indices and the thicknesses being selected in such a manner that the optical path length difference $\Delta n_1 d_1$ in the first plastic film is almost identical to the optical path length difference $\Delta n_2 d_2$ in the second plastic film, $\Delta n_1$ and $\Delta n_2$ denoting the differences between the main refractive indices in the first and second plastic films, respectively, and $d_1$ and $d_2$ denoting the thicknesses of the first and second plastic films, respectively.

2. Liquid crystal display according to Claim 1, characterised in that the two films consist of material with identical main refractive indices and have identical thicknesses.

3. Liquid crystal display according to Claims 1 - 2, characterised in that the surfaces of the films are welded to each other.

4. Liquid crystal display according to Claims 1 - 2, characterised in that the surfaces of the films are bonded to each other, the adhesive being a two-component adhesive.

5. Liquid crystal display according to Claim 4, characterised in that the adhesive has the same refractive index as the film material.

6. Liquid crystal display according to Claims 1 - 5, characterised in that the film material is polyaryl sulphone, polystyrene, polyvinyl chloride, polyurethane, styrene/acrylonitrile copolymer, polymethylpentene, polyacrylate, polymethacrylate, cellulose ester or a mixture or a copolymer containing the stated polymers.

7. Liquid crystal display according to Claims 1 - 5, characterised in that the film material is polycarbonate, preferably cast polycarbonate or a plastic mixture which contains at least 10% by weight of polycarbonate.

8. Liquid crystal display according to Claims 1 - 7, characterised in that the plastic films are provided, in particular coated, with halogenated, in particular fluorinated compounds, Si-containing polymers, polyacrylates and/or polymethacrylates, and/or are surface-crosslinked.

**Revendications**

1. Affichage à cristaux liquides avec une fenêtre qui présente une lamelle de matière plastique optiquement uniaxe, biréfringente, caractérisé par le fait que la fenêtre est constituée par deux lamelles de matière plastique disposées parallèlement l'une derrière l'autre, optiquement uniaxes, dont les axes optiques sont situés dans le plan des lamelles, qui sont disposées de telle sorte que les directions des lamelles de matière plastique, correspondant pour chacune d'elles à l'indice de réfraction principal le plus élevé, forment un angle de 90 $\pm$ 7°, la matière dont sont constituées les lamelles étant choisie, en ce qui concerne les indices de réfraction principaux et les épaisseurs, de sorte que la différence de chemin optique $\Delta n_1 d_1$ dans la première lamelle est approximativement égale à la différence de chemin optique $\Delta n_2 d_2$ dans la seconde lamelle de matière plastique, $\Delta n_1$, $\Delta n_2$ signifiant les différences des indices de réfraction principaux dans la première lamelle et respectivement dans la deuxième lamelle, et $d_1$,$d_2$ signifiant l'épaisseur de la première lamelle et respectivement de la deuxième lamelle.

2. Affichage à cristaux liquides selon la revendication 1, caractérisé par le fait que la matière dont sont constituées les deux lamelles a les mêmes indices de réfraction principaux et les mêmes épaisseurs.

3. Affichage à cristaux liquides selon les revendications 1 et 2, caractérisé par le fait que les lamelles sont soudées entre elles par leur surface.

4. Affichage à cristaux liquides selon les revendications 1 et 2, caractérisé par le fait que les lamelles sont collées entre elles, la colle étant à deux composants.

5. Affichage à cristaux liquides selon la revendication 4, caractérisé par le fait que la colle a le même indice de réfraction que la matière des lamelles.

6. Affichage à cristaux liquides selon les revendications 1 à 5, caractérisé par le fait que la matière des lamelles est de la polyarylsulfone, du polystyrène, du chlorure de polyvinyle, du polyuréthanne, un copolymère styrène-nitrile acrylique, du polyméthylpentène, un ester d'acide polyacrylique, un ester d'acide polyméthacrylique, un ester de cellulose ou un mélange ou un copolymère qui contient les polymères cités.

7. Affichage à cristaux liquides selon les revendications 1 à 5, caractérisé par le fait que la matière des lamelles est du polycarbonate, de préférence du polycarbonate coulé ou un mélange de matières plastiques qui contient au moins 10 % en poids de polycarbonate.

8. Affichage à cristaux liquides selon les revendications 1 à 7, caractérisé par le fait que les lamelles de matière plastique sont pourvues de composés halogénés, en particulier fluorés, de polymères contenant du silicium, de polyacrylates et/ou de polyméthacrylates, et qu'en particulier elles sont revêtues et/ou réticulées en surface avec ces produits.